# EUROPÄISCHE PATENTSCHRIFT

(11) **EP 3 378 742 B1**
(45) Veröffentlichungstag und Bekanntmachung des Hinweises auf die Patenterteilung: **05.08.2020**
(21) Anmeldenummer: 18158150.5
(22) Anmeldetag: 22.02.2018
(51) Int. Cl.: B62H 3/10, B25H 1/00, B62H 3/00, B65D 85/68

(54) **FAHRRAD- UND FAHRRADRAHMEN-STÄNDER**
BICYCLE AND BICYCLE FRAME STAND
SUPPORT DE BICYCLETTE ET DE CADRE DE BICYCLETTE

(30) Priorität: 01.03.2017 DE 202017001043 U
(43) Veröffentlichungstag der Anmeldung: 26.09.2018
(73) Patentinhaber: Canyon Bicycles GmbH, 56073 Koblenz (DE)
(72) Erfinder: Keiller, John, Manchester, M1 3NJ (GB)
(74) Vertreter: dompatent von Kreisler Selting Werner - Partnerschaft von Patent- und Rechtsanwälten mbB

(56) Entgegenhaltungen:
- EP-A1- 0 692 346
- EP-A1- 2 505 463
- DE-U1- 29 614 962
- DE-U1-202013 102 637
- Alan "danger" Zinniker: "Review: Feedback Sports' Euro-Style Sprint Work Stand - Cyclocross Magazine - Cyclocross News, Races, Bikes, Photos, Videos", Cyclocross Magazine, 22 May 2013 (2013-05-22), XP55606496, www.cxmagazine.com Retrieved from the Internet: URL:https://web.archive.org/web/2015110722 5758/http://www.cxmagazine.com/review-feed back-sports-eurostyle-sprint-work-stand [retrieved on 2019-07-17]

## Beschreibung

Die Erfindung betrifft einen Fahrradständer sowie einen Fahrradrahmen-Ständer. Ferner betrifft die Erfindung einen Fahrradrahmen-Transportbehälter.

Zum Halten bzw. Abstellen von Fahrrädern sind nicht mit Fahrradrahmen verbundene Fahrradständer bekannt. Diese sind im Querschnitt im Wesentlichen L-förmig, wobei ein Schenkelelement am Boden aufsteht und das andere Schenkelelement im Wesentlichen senkrecht nach oben ragt. Das nach oben ragende Schenkelelement weist ein Fahrradaufnahmeelement auf, das mit dem Fahrrad verbunden werden kann. Insbesondere ist das Fahrradaufnahmeelement als nach oben offener Schlitz ausgebildet, in den die Hinterradachse von oben eingeschoben werden kann. Das auf dem Boden aufstehende Schenkelelement ist üblicherweise derart angeordnet, dass das Hinterrad auf diesem Schenkelelement steht.

Ein Fahrradrahmen-Ständer mit den Merkmalen des Oberbegriffs des Anspruchs 1 ist aus EP0692346 bekannt.

Aufgabe der Erfindung ist es, die Verwendbarkeit eines Fahrradständers zu verbessern.

Die Lösung der Aufgabe erfolgt durch einen Fahrrad- und Fahrradrahmen-Ständer gemäß Anspruch 1 sowie einen Fahrradrahmen-Transportbehälter gemäß Anspruch 10.

Der erfindungsgemäße Fahrrad- und Fahrradrahmen-Ständer, der im Folgenden als Ständer bezeichnet ist, weist ein erstes und ein zweites Schenkelelement auf. Die beiden Schenkelelemente sind vorzugsweise derart zueinander angeordnet bzw. derart miteinander verbunden, dass sie im Querschnitt bzw. in Seitenansicht im Wesentlichen L-förmig ausgestaltet sind. Die weisen die beiden Schenkelelemente weisen einen Winkel zueinander von ≤90° auf.

Das erste Schenkelelement weist ein Fahrradaufnahmeelement zur Aufnahme eines Fahrradbauteils eines montierten Fahrrads auf. Hierbei kann das Fahrradaufnahmeelement als einseitig offener Schlitz ausgebildet sein, so dass beispielsweise eine Hinterradachse, eine Kettenstrebe oder dergleichen von oben in das schlitzförmige Fahrradaufnahmeelement eingesteckt werden kann.

Erfindungsgemäß weist das zweite Schenkelelement ein Rahmen-Aufnahmeelement für einen Fahrradrahmenbauteil auf. Hierdurch ist es möglich, auch einen Fahrradrahmen, an dem kein Hinterrad oder andere Bauteile befestigt sind, zu fixieren. Insbesondere erfolgt bei dem Nutzen des Ständers als Fahrradrahmen-Ständer ein Aufstellen des ersten Schenkels auf den Boden oder eine andere Unterlage, so dass der zweite Schenkel insbesondere nach oben ragt. Der erfindungsgemäße Fahrrad- und Fahrradrahmen-Ständer weist somit eine Doppelfunktion auf, dass ein gesamtes Fahrrad oder ein Fahrradrahmen sicher gehalten werden kann.

Erfindungsgemäß ist das Rahmen-Aufnahmeelement derart ausgebildet, dass es zur Verbindung zumindest eines der beiden Ausfall-Enden eines Fahrradrahmens geeignet ist. Um einen sicheren Halt und insbesondere sicheren Stand zu gewährleisten, ist es besonders bevorzugt, dass das Rahmen-Aufnahmeelement derart ausgebildet ist, dass es mit beiden Ausfall-Enden, insbesondere eines Hinterbaus eines Fahrradrahmens, verbunden werden kann. Hierbei ist es besonders bevorzugt, dass das Rahmen-Aufnahmeelement eine insbesondere zylindrische Öffnung aufweist, so dass hierdurch ein Fixierelement aufgenommen werden kann. Hierbei kann beispielsweise beim Befestigen mit einer Kettenstrebe o. dgl. ein Klettband oder ein anderes Befestigungselement als Fixierelement vorgesehen sein. Besonders bevorzugt ist es, als Fixierelement ein stabförmiges Element entsprechend einer Fahrradachse vorzusehen. Diese Fahrradachse kann sodann durch die zylindrischen Öffnungen und die Öffnungen in dem Bereich der Ausfall-Enden eingeführt werden. Hierbei ist es besonders bevorzugt, dass als Fixierelement eine Schnellspann-Fahrradachse vorgesehen wird.

Bei einer besonders bevorzugten Ausführungsform des Fahrrad- und Fahrradrahmen-Ständers ist das Rahmen-Aufnahmeelement derart ausgebildet, dass es zur Fixierung eines Fahrradrahmens zwischen den beiden Ausfall-Enden des Fahrradrahmens angeordnet ist. Das Rahmen-Aufnahmeelement ist hierbei im Bereich der Hinterradnabe angeordnet. Die Fixierung erfolgt sodann wiederum vorzugsweise mit Hilfe einer Schnellspann-Achse.

Das Rahmen-Aufnahmeelement ist, insbesondere, wenn es zur Anordnung zwischen den beiden Ausfall-Enden des Rahmens dient, derart ausgebildet, dass es eine Länge von ca. 14 - 18 cm, insbesondere 15 - 17 cm, aufweist. In Längsrichtung eines derart ausgebildeten Rahmen-Aufnahmeelements ist die Öffnung vorgesehen, durch die sodann das insbesondere als Schnellspann-Achse ausgebildete Fixierelement gesteckt werden kann.

Das Rahmen-Aufnahmeelement ist vorzugsweise einstückig mit dem zweiten Schenkelelement ausgebildet oder zumindest fest mit diesem verbunden.

Bei Verwenden des Ständers als Fahrradrahmen-Ständer dient das erste Schenkelelement als Aufstandelement. Dieses kann beispielsweise zur Präsentation in Fahrradläden genutzt werden.

Bei der Verwendung des Ständers als Fahrrad-Ständer dient hingegen das zweite Schenkelelement als Aufstandelement. Hierbei kann die übliche Verwendung beispielsweise zur Präsentation eines gesamten Fahrrads oder auch zum Aufbewahren des Fahrrads, zur Montage oder Justage von Bauteilen am Fahrrad etc. genutzt werden.

Desweiteren betrifft die Erfindung einen Fahrradrahmen-Transportbehälter. Bei einem derartigen Transportbehälter handelt es sich insbesondere um einen Karton aus Pappe, mit dem der Fahrradrahmen mittels Transportunternehmen verschickt u. dgl. werden kann. Der Fahrradrahmen-Transportbehälter weist einen Außenbehälter auf, innerhalb dem der Fahrradrahmen angeordnet ist. Selbstverständlich können auch weitere Bauteile eines Komplettfahrrads in dem Außenkarton angeordnet werden. Insbesondere können hier zusätzlich der Lenker, die Laufräder und weitere Anbauteile im Außenkarton mit vorgesehen werden. Erfindungsgemäß ist in dem Fahrradrahmen-Transportbehälter der vorstehend beschriebene Fahrradrahmen-Ständer angeordnet. Mit diesem ist der Hinterbau des zu transportierenden Fahrradrahmens verbunden und somit sicher gehalten. Das Nutzen des Fahrradrahmen-Ständers innerhalb eines Transportkartons hat den Vorteil, dass hierdurch der Fahrradrahmen im Transportbehälter sicher und zuverlässig gehalten ist und somit die Gefahr der Beschädigung beim Transport erheblich verringert ist. Der Fahrradrahmen-Ständer ist hierbei - wie vorstehend beschrieben - vorteilhaft weitergebildet.

Zusätzlich kann in dem Außenbehälter ein Gabel-Fixierelement angeordnet sein. Dies ist vorteilhaft, wenn die Gabel bereits mit dem Fahrradrahmen montiert ist, so dass insbesondere die Gabelrohre in dem Fahrradgabel-Fixierelement gehalten und fixiert werden können.

Nachfolgend wird die Erfindung anhand einer bevorzugten Ausführungsform unter Bezugnahme auf die Zeichnungen näher erläutert.

Es zeigen:
- Figur 1: eine schematische perspektivische Ansicht des Fahrrad- und Fahrradrahmen-Ständers,
- Figur 2: eine schematische Seitenansicht des Fahrrad- und Fahrradrahmen-Ständers in Seitenansicht in der Anordnung als Fahrradständer,
- Figur 3: eine schematische Seitenansicht des Fahrrad- und Fahrradrahmen-Ständers in Seitenansicht in der Anordnung als Rahmen-Ständer und
- Figur 4: eine schematische Seitenansicht eines teilweise aufgeschnittenen Fahrradrahmen-Transportbehälters.

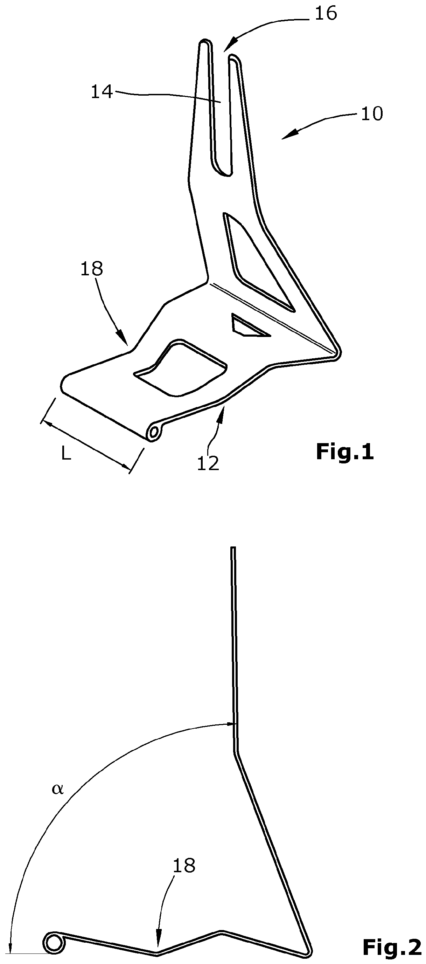

Der Fahrrad- und Fahrradrahmen-Ständer, der im Folgenden wiederum als Ständer bezeichnet wird, weist einen ersten Schenkel 10 und einen zweiten Schenkel 12 auf. Die beiden Schenkel 10, 12 sind fest miteinander verbunden, insbesondere einstückig ausgebildet. Insbesondere handelt es sich um ein BlechBiegeteil. Ein Winkel α (Fig. 2) zwischen dem ersten und dem zweiten Schenkel 10, 12 ist in dem dargestellten Ausführungsbeispiel geringfügig kleiner als 90°.

In den Figuren 1 und 2 weist der Ständer eine Stellung auf, in der er als Fahrradständer nutzbar ist. In dieser Stellung dient das zweite Schenkelelement 12 als Aufstandelement, das beispielsweise auf einem insbesondere horizontal ausgerichteten Boden o. dgl. aufsteht. Das erste Schenkelelement 10 weist ein im dargestellten Ausführungsbeispiel schlitzförmig ausgebildetes Fahrrad-Aufnahmeelement 14 auf. Das Fahrrad-Aufnahmeelement 14 weist eine zur Außenseite des ersten Schenkelelements 10 weisende Öffnung 16 auf, die somit in der in Figuren 1 und 2 dargestellten Stellung nach oben weist. In das schlitzförmige Fahrrad-Aufnahmeelement 14 kann von oben in die Öffnung 16 eine Hinterradachse bzw. der Kopf einer Schnellspann-Achse eingeführt werden. Der Reifen des Hinterrades ist hierbei in einer Kerbe bzw. Einbuchtung 18 des zweiten Schenkelelements 12 angeordnet, so dass das Gewicht des Fahrrads auf dem zweiten Schenkelelement 12 aufsteht.

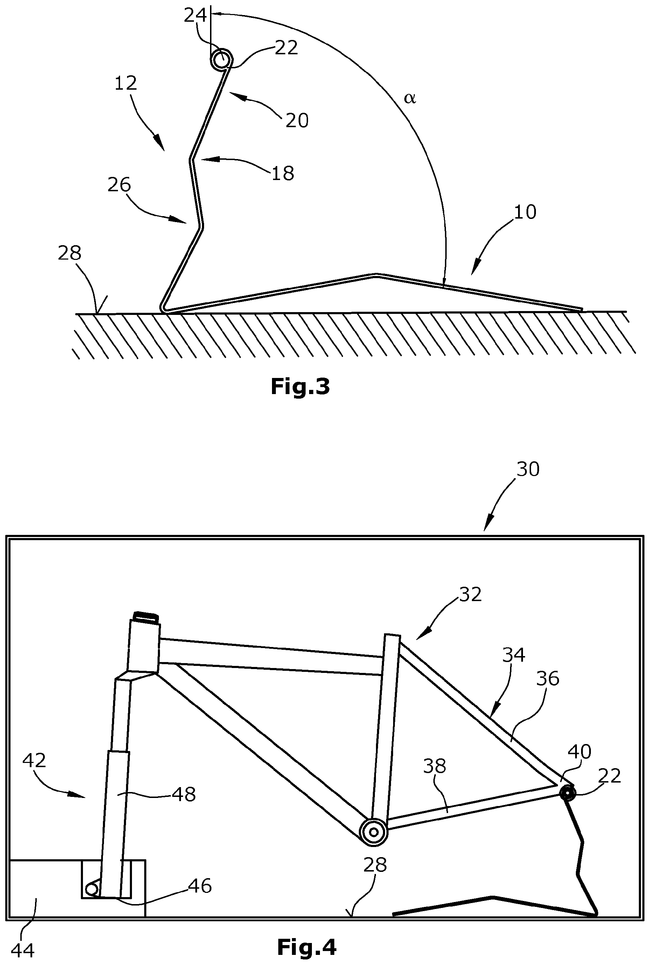

Das zweite Schenkelelement 12 weist an seinem äußeren bzw. entfernten Ende 20, das bei der Nutzung als Fahrradrahmen-Ständer (Figur 3) nach oben weist, ein Rahmen-Aufnahmeelement 22 auf. Das Rahmen-Aufnahmeelement 22 weist eine zylindrische Öffnung 24 auf. Diese erstreckt sich über die gesamte Länge L (Figur 1) des Rahmen-Aufnahmeelements 22.

Zur Erhöhung der Stabilität weist das zweite Schenkelelement 12 zusätzlich zu der Kerbe oder Ausbuchtung 18 eine auf der gegenüberliegenden Seite des zweiten Schenkelelements 12 vorgesehene weitere Ausbuchtung oder Kerbe 26 auf. Das zweite Schenkelelement ist somit in Seitenansicht etwas Z- bzw. S-förmig ausgebildet.

Zum Halten eines Fahrradrahmens liegt das erste Schenkelelement 10 beispielsweise auf einer Oberseite 28 eines Bodens auf (Figur 3).

Besonders bevorzugt ist die Verwendung des Rahmenständers in einem Fahrradrahmen-Transportbehälter, wie er schematisch in Figur 4 dargestellt ist. Hierbei steht das erste Schenkelelement 10 auf dem Boden 28 eines Rahmen-Transportbehälters 30 auf. Der insbesondere aus Karton hergestellte Rahmen-Transportbehälter 30 ist in Außenansicht quaderförmig ausgebildet, wobei in Figur 4 die vordere Seitenwand nicht dargestellt ist, so dass der im Inneren angeordnete Fahrradrahmen 32 sichtbar ist. Der Fahrradrahmen 32 weist einen Hinterbau 34 auf. Im Bereich, in dem die Sattelstreben 36 und die Kettenstreben 38 zusammenlaufen, sind zwei Ausfall-Enden 40 am Fahrradrahmen 32 vorgesehen. Zwischen den beiden Ausfall-Enden 40 ist entsprechend einer Fahrradnabe das Rahmen-Aufnahmeelement 22 des Rahmenständers angeordnet. Durch die Ausfall-Enden 40 und die Öffnung 24 des Rahmen-Aufnahmeelements 22 ist eine nicht dargestellte Schnellspann-Achse gesteckt und entsprechend fixiert. Hierdurch ist ein festes Verbinden der Ausfall-Enden 40 des Rahmens 32 mit dem Rahmenständer gewährleistet. Somit ist der Rahmen 32 sicher im Bereich des Hinterbaus 34 in dem Rahmen-Transportbehälter 30 angeordnet.

Im Bereich einer Fahrradgabel 42 des Fahrradrahmens 32 ist am Boden 28 des Fahrradrahmen-Transportbehälters ein Gabel-Fixier-Element 44 angeordnet. Dieses weist beispielsweise Ausnehmungen 46 auf, in denen die Ausfall-Enden der beiden Gabelrohre 48 fixiert werden können.

Zusätzlich ist es möglich, in dem Fahrrad-Transportbehälter 30 beispielsweise auch den Lenker, den Sattel und andere Anbauteile mit anzuordnen. Hierzu können zusätzliche Aufnahmekartons oder andere Aufnahmebehälter in dem Fahrradrahmen-Behälter 30 angeordnet werden. Gegebenenfalls erfolgt jedoch auch eine Versendung des Fahrradrahmens ohne weitere Anbauteile oder gegebenenfalls nur mit einem Teil der Anbauteile wie Sattelstange und Lenker.

## Patentansprüche

1. Fahrrad- und Fahrradrahmen-Ständer, mit
einem ersten Schenkelelement (10),
einem zweiten Schenkelelement (12), das zum ersten Schenkelelement einen Winkel ≤90° aufweist,
wobei das erste Schenkelelement (10) ein Fahrrad-Aufnahmeelement (14) für ein Fahrrad-Bauteil eines montierten Fahrrads aufweist und
wobei das zweite Schenkelelement (12) ein Rahmen-Aufnahmeelement (22) für ein Fahrradrahmen-Bauteil aufweist,
**dadurch gekennzeichnet, dass**
das Rahmen-Aufnahmeelement (22) zur Verbindung mit zumindest einem der beiden Ausfall-Enden (40) des Fahrradrahmens (32) ausgebildet ist.

2. Fahrrad- und Fahrradrahmen-Ständer nach Anspruch 1, **dadurch gekennzeichnet, dass** das Rahmen-Aufnahmeelement (22) eine insbesondere zylindrische Öffnung (24) zur Aufnahme eines Fixierelements aufweist.

3. Fahrrad- und Fahrradrahmen-Ständer nach Anspruch 2, **dadurch gekennzeichnet, dass** das Fixierelement eine Fahrradachse aufweist, die insbesondere als Schnellspann-Achse ausgebildet ist.

4. Fahrrad- und Fahrradrahmen-Ständer nach einem der Ansprüche 1 bis 3, **dadurch gekennzeichnet, dass** das Rahmen-Aufnahmeelement (22) derart ausgebildet ist, dass es zur Fixierung eines Fahrradrahmens (32) zwischen den beiden Ausfall-Enden (40) des Fahrradrahmens (32) angeordnet werden kann.

5. Fahrrad- und Fahrradrahmen-Ständer nach einem der Ansprüche 1 bis 4, **dadurch gekennzeichnet, dass** das Rahmen-Aufnahmeelement (22) eine Länge von 14 - 18 cm, insbesondere 15 - 17 cm, aufweist und die Öffnung (24) vorzugsweise in Längsrichtung verläuft.

6. Fahrrad- und Fahrradrahmen-Ständer nach einem der Ansprüche 1 bis 5, **dadurch gekennzeichnet, dass** das Rahmen-Aufnahmeelement (22) fest mit dem zweiten Schenkelelement (12) verbunden und insbesondere einstückig mit diesem ausgebildet ist.

7. Fahrrad- und Fahrradrahmen-Ständer nach einem der Ansprüche 1 bis 6, **dadurch gekennzeichnet, dass** bei Verwendung als Fahrradrahmen-Ständer das erste Schenkelelement (10) als Aufstandelement dient.

8. Fahrrad- und Fahrradrahmen-Ständer nach einem der Ansprüche 1 bis 6, **dadurch gekennzeichnet, dass** bei Verwendung als Fahrradständer das zweite Schenkelelement (12) als Aufstandelement dient.

9. Fahrrad- und Fahrradrahmen-Ständer nach einem der Ansprüche 1 bis 8, **dadurch gekennzeichnet, dass** das Fahrradrahmen-Aufnahmeelement (14) einen einseitig offenen Schlitz zur Aufnahme eines Fahrrad-Bauteils aufweist.

10. Fahrradrahmen-Transportbehälter, mit
einem Außenbehälter (30) und einem im Außenbehälter (30) angeordneten Fahrradrahmen-Ständer nach einem der Ansprüche 1 bis 9.

11. Fahrradrahmen-Transportbehälter nach Anspruch 10, **dadurch gekennzeichnet, dass** im Außenbehälter (30) ein Gabel-Fixier-Element (44) angeordnet ist.

## Claims

1. A bicycle and bicycle frame stand, comprising
a first leg element (10),
a second leg element (12) comprising an angle of ≤90° relative to the first leg element,
wherein the first leg element (10) comprises a bicycle receiving element (14) for a bicycle component of an assembled bicycle, and
wherein the second leg element (12) comprises a frame receiving element (22) for a bicycle frame component,
**characterized in that**
the frame receiving element (22) is adapted for connection to at least one of the two dropouts (40) of the bicycle frame (32).

2. The bicycle and bicycle frame stand according to claim 1, **characterized in that** the frame receiving element (22) comprises a particularly cylindric opening (24) for receiving a fixing element.

3. The bicycle and bicycle frame stand according to claim 2, **characterized in that** the fixing element comprises a bicycle axle which is particularly adapted as a quick-release axle.

4. The bicycle and bicycle frame stand according to one of claims 1 to 3, **characterized in that** the frame receiving element (22) is adapted to be arranged for fixation of a bicycle frame (32) between the two dropouts (40) of the bicycle frame (32).

5. The bicycle and bicycle frame stand according to one of claims 1 to 4, **characterized in that** the frame receiving element (22) has a length of 14-18 cm, particularly 15-17 cm, and that the opening (24) preferably extends in a longitudinal direction.

6. The bicycle and bicycle frame stand according to one of claims 1 to 5, **characterized in that** the frame receiving element (22) is fixedly connected to the second leg element (12) and is particularly integrally formed therewith.

7. The bicycle and bicycle frame stand according to one of claims 1 to 6, **characterized in that**, upon usage as a bicycle frame stand, the first leg element (10) serves as a support element.

8. The bicycle and bicycle frame stand according to one of claims 1 to 6, **characterized in that**, upon usage as a bicycle stand, the second leg element (12) serves as a support element.

9. The bicycle and bicycle frame stand according to one of claims 1 to 8, **characterized in that** the bicycle frame receiving element (14) comprises a one-sided open slit for receiving a bicycle component.

10. A bicycle frame transport container, comprising
an outer container (30) and a bicycle frame stand according to one of claims 1 to 9 arranged within the outer container (30).

11. Bicycle frame transport container according to claim 10, **characterized in that** a fork-fixing element (44) is arranged within the outer container (30).

## Revendications

1. Support de bicyclette et de cadre de bicyclette, doté d'un premier élément de branche (10),
d'un deuxième élément de branche (12), lequel présente un angle ≤90° par rapport au premier élément de branche,
dans lequel le premier élément de branche (10) présente un élément de logement de bicyclette (14) pour un composant de bicyclette d'une bicyclette assemblée et
dans lequel le deuxième élément de branche (12) présente un élément de logement de cadre (22) pour un composant de cadre de bicyclette,
**caractérisé en ce que**
l'élément de logement de cadre (22) est réalisé pour le raccordement avec au moins une des deux pattes (40) du cadre de bicyclette (32).

2. Support de bicyclette et de cadre de bicyclette selon la revendication 1, **caractérisé en ce que** l'élément de logement de cadre (22) présente une ouverture (24) en particulier cylindrique pour loger un élément d'immobilisation.

3. Support de bicyclette et de cadre de bicyclette selon la revendication 2, **caractérisé en ce que** l'élément d'immobilisation comporte un axe de bicyclette, lequel est en particulier réalisé comme axe à serrage rapide.

4. Support de bicyclette et de cadre de bicyclette selon l'une des revendications 1 à 3, **caractérisé en ce que** l'élément de logement de cadre (22) est réalisé de telle sorte qu'il peut, afin d'immobiliser un cadre de bicyclette (32), être agencé entre les deux pattes (40) du cadre de bicyclette (32).

5. Support de bicyclette et de cadre de bicyclette selon l'une des revendications 1 à 4, **caractérisé en ce que** l'élément de logement de cadre (22) présente une longueur de 14 - 18 cm, en particulier 15 - 17 cm, et l'ouverture (24) s'étend de préférence dans la direction longitudinale.

6. Support de bicyclette et de cadre de bicyclette selon l'une des revendications 1 à 5, **caractérisé en ce que** l'élément de logement de cadre (22) est raccordé de manière fixe au deuxième élément de branche (12) et est en particulier réalisé d'une pièce avec celui-ci.

7. Support de bicyclette et de cadre de bicyclette selon l'une des revendications 1 à 6, **caractérisé en ce que** lors de l'utilisation en tant que support de cadre de bicyclette, le premier élément de branche (10) sert comme élément porteur.

8. Support de bicyclette et de cadre de bicyclette selon l'une des revendications 1 à 6, **caractérisé en ce que** lors de l'utilisation en tant que support de bicyclette, le deuxième élément de branche (12) sert comme élément porteur.

9. Support de bicyclette et de cadre de bicyclette selon l'une des revendications 1 à 8, **caractérisé en ce que** l'élément de logement de cadre de bicyclette (14) présente une fente ouverte d'un côté pour loger un composant de bicyclette.

10. Conteneur de transport de cadre de bicyclette, doté
d'un conteneur externe (30) et d'un support de cadre de bicyclette selon l'une des revendications 1 à 9 agencé dans le conteneur externe (30).

11. Conteneur de transport de cadre de bicyclette selon la revendication 10, **caractérisé en ce qu'**un élément d'immobilisation de fourche (44) est agencé dans le conteneur externe (30).
